# EUROPÄISCHE PATENTSCHRIFT

(11) **EP 3 289 199 B1**
(45) Veröffentlichungstag und Bekanntmachung des Hinweises auf die Patenterteilung: **27.11.2019**
(21) Anmeldenummer: 16722519.2
(22) Anmeldetag: 16.03.2016
(51) Int. Cl.: F02B 37/12, F02M 21/04, F02D 19/02, F02D 41/00, F02D 41/06, F02D 23/00

(54) **BRENNKRAFTMASCHINE UND VERFAHREN ZUM STARTEN EINER BRENNKRAFTMASCHINE**
INTERNAL COMBUSTION ENGINE AND METHOD FOR STARTING AN INTERNAL COMBUSTION ENGINE
MOTEUR À COMBUSTION INTERNE ET PROCÉDÉ DE DÉMARRAGE D'UN MOTEUR À COMBUSTION INTERNE

(30) Priorität: 27.04.2015 AT 2512015
(43) Veröffentlichungstag der Anmeldung: 07.03.2018
(73) Patentinhaber: Innio Jenbacher GmbH & Co OG, 6200 Jenbach (AT)
(72) Erfinder: FUCHS, Jochen, 6112 Wattens (AT); LU, Hang, 65760 Eschborn (DE)
(74) Vertreter: Torggler & Hofinger Patentanwälte
(86) Internationale Anmeldenummer: PCT/AT2016/050062
(87) Internationale Veröffentlichungsnummer: WO 2016/172748

(56) Entgegenhaltungen:
- EP-A1- 1 197 646
- EP-A1- 2 199 580
- WO-A1-2014/200085
- WO-A1-2014/208138
- DE-A1- 3 135 107
- DE-A1-102011 010 288
- DE-A1-102013 213 351
- DE-A1-102014 006 019
- US-A1- 2011 077 847

## Beschreibung

Die vorliegende Erfindung betrifft eine Brennkraftmaschine gemäß den Merkmalen des Oberbegriffs des Anspruchs 1 sowie ein Verfahren zum Starten einer Brennkraftmaschine.

Es ist bekannt, Brennkraftmaschinen mit einem Turbolader, einem Gemischkühler sowie einem Umblaseventil auszustatten. Das Umblaseventil kann von einer Steuer- oder Regeleinheit geöffnet werden. Dies erlaubt einem Teilstrom eines für die Verbrennung vorgesehenen Treibstoffgemisches einen Verdichter des Turboladers zu umgehen. Auf diese Art und Weise kann der Ladedruck und letztendlich die Leistung der Brennkraftmaschine mit relativ kurzen Reaktionszeiten gesteuert oder geregelt werden. Dabei wird natürlich das Umblaseventil geschlossen, wenn volle Leistung bzw. eine Erhöhung der Drehzahl notwendig ist. Im Stand der Technik wurde das Umblaseventil deshalb während des Startvorgangs geschlossen gehalten.

Nachteilig hierbei ist, dass der Verdichter des Turboladers und der Gemischkühler ein großes "Totvolumen" bilden, das erst gefüllt werden muss, bevor die Brennkraftmaschine starten kann. Anders ausgedrückt muss das Treibstoffgemisch einen relativ langen Weg zurücklegen, wobei noch Strömungshindernisse, wie der Verdichter eines Turboladers und etwaige Gemischkühler, überwunden werden müssen. Dies führt zu einer relativ langen Startzeit der Brennkraftmaschine.

In der US 2011/077847 wird ein System beschrieben, welches einen Verbrennungsmotor mit einer Luftzufuhr und einen in der Luftzufuhr angeordneten Verdichter aufweist. Bei dem Verdichter handelt es sich um einen Turbolader. Eine Treibstoffzuführung für gasförmigen Treibstoff ist über eine erste Fluidleitung in Luftströmungsrichtung gesehen vor dem Verdichter sowie über eine zweite Fluidleitung in Luftströmungsrichtung gesehen nach dem Verdichter fluidisch mit der Luftzufuhr verbunden. In der zweiten Fluidleitung ist ein Ventil mit einem elektronischen Steuereingang vorgesehen. Bei einem Start des Verbrennungsmotors wird das Ventil geöffnet.

Weitere Systeme zur Steuerung einer Brennkraftmaschine sind in DE 10 2013 213 351 und DE 31 35 107 beschrieben.

Aufgabe der vorliegenden Erfindung ist es, eine Brennkraftmaschine sowie ein Verfahren zum Starten einer Brennkraftmaschine anzugeben, wobei die Startzeit verkürzt ist.

In Bezug auf die Brennkraftmaschine wird dies durch die Merkmale des Anspruchs 1 gelöst. In Bezug auf das Verfahren wird diese Aufgabe durch die Merkmale des Anspruchs 11 gelöst.

Durch die Erfindung kann das Brenngas auf schnellst möglichen Weg in eine für die Verbrennung vorgesehene Zone, wie beispielsweise einen Zylinder, gebracht werden.

Zum Starten wird die Brennkraftmaschine zunächst durch einen externen Antrieb geschleppt. Hierdurch entsteht ein Sog, welcher für den Transport des Treibstoffgemisches verantwortlich ist. Sobald das Treibstoffgemisch den für die Zündung vorgesehenen Bereich erreicht, muss die Brennkraftmaschine nicht mehr geschleppt werden, sondern läuft aus eigener Kraft.

Nun setzt die Wirkung des zumindest einen Turboladers ein, wodurch das Treibstoffgemisch nicht mehr lediglich durch die Sogwirkung der Kolben-Zylindereinheit angesaugt wird, sondern auch vom Verdichter des zumindest einen Turboladers aktiv transportiert wird.

Der Erfindung liegt die Erkenntnis zugrunde, dass die Zeit, in welcher der Transport des Treibstoffgemisches lediglich durch die Sogwirkung der Kolben-Zylindereinheit bewirkt wird, verkürzt werden kann, indem das Umblaseventil geöffnet wird. Der Weg über das Umblaseventil ist für das Treibstoffgemisch erstens kürzer und zweitens mit weniger Widerstand verbunden.

Das Treibstoffgemisch erreicht die für die Verbrennung vorgesehene Zone schneller und startet dadurch schneller. Es ist zu bemerken, dass sich die Richtung des Treibstoffgemischstroms durch das Umblaseventil umkehrt, sobald die Wirkung des zumindest einen Turboladers einsetzt. Dies ist eine einfache Folge daraus, dass nach dem Verdichter ein höherer Druck als vor dem Verdichter vorliegt. Ab diesem Zeitpunkt setzt also die Steuer- oder Regelwirkung des Umblaseventils ein. Folglich kann der Verdichter des Turboladers durch das Umblaseventil in beiden Richtungen umgangen werden.

Als Umblaseventil können verschiedenste Ventile eingesetzt werden. Beispielsweise kann das Umblaseventil ein Ventil sein, welches zwischen vollständiger Sperrung und vollständiger Öffnung schalten kann. Natürlich kann es bevorzugt sein, ein Umblaseventil zu verwenden, welches neben der vollständigen Schließung und der vollständigen Öffnung eine Vielzahl weiterer Öffnungsgrade unterstützt.

Vorteilhafte Weiterbildungen der Erfindung sind in den abhängigen Ansprüchen definiert.

Die Erfindung kann sowohl bei Brennkraftmaschinen mit einem oder mehreren Turboladern eingesetzt werden. Bei mehreren Turboladern können die Verdichter vorzugsweise in Serie geschaltet sein.

Besonders bevorzugt kann dabei eine Ausführungsform sein, bei der die Verdichter sämtlicher Turbolader der Brennkraftmaschine zumindest von einem Teilstrom des für die Verbrennung vorgesehenen Treibstoff-Gemisches mittels des Umblaseventils umgehbar sind, da dies den positiven Effekt der Erfindung maximiert.

Konstruktiv besonders einfach kann die Erfindung ausgestaltet sein, indem eine Umblaseleitung zur Umgehung des Verdichters des zumindest einen Turboladers vorgesehen ist, wobei das Umblaseventil in der Umblaseleitung angeordnet ist.

Bevorzugt kann dabei eine Ausführungsform sein, bei der eine Umblaseleitung zur Umgehung des zumindest einen Gemischkühlers vorgesehen ist, wobei das Umblasventil in der Umblaseleitung angeordnet ist.

Besonders bevorzugt kann dabei eine Ausführungsform sein, bei der die Umblaseleitung zur Umgehung des zumindest einen Gemischkühlers mit der Umblaseleitung zur Umgehung des Verdichters des zumindest einen Turboladers kombiniert ist.

Besonders bevorzugt kann eine Mischeinrichtung vorgesehen sein, mittels welcher ein Treibstoffgemisch, insbesondere ein Treibstoff-Luft-Gemisch, herstellbar ist. Die Mischeinrichtung kann als Venturimischer, Spaltmischer, Gasdosierventil oder dergleichen ausgeführt sei (Gasdosierventile verfügen über eine Regelung oder Steuerung des Mischungsgrads).

Die Umblaseleitung kann bevorzugt mit einem Ausgang der Mischeinrichtung für das Treibstoff-Gemisch verbunden sein.

Die Brennkraftmaschine kann einen oder mehrere Zylinder aufweisen, in welchen die Verbrennung des Treibstoffs geschieht. Besonders bevorzugt kann die Erfindung bei einem Gasmotor eingesetzt werden, der vorzugsweise stationär ist. Der Gasmotor kann einen Gasmischer vor einem Abgasturbolader und/oder vor einem Gemischkühler aufweisen.

Besonders bevorzugt kann es vorgesehen sein, dass das Umblaseventil beim Start der Brennkraftmaschine vollständig geöffnet wird bzw. vollständig geöffnet gehalten wird. Natürlich kann auch eine teilweise Öffnung bzw. ein teilweises Geöffnethalten in manchen Situationen sinnvoll sein.

Besonders bevorzugt kann die Erfindung bei Brennkraftmaschinen eingesetzt werden, welche einen Generator antreiben. Dieser Generator kann zur Einspeisung elektrischer Energie in ein Energieversorgungsnetz geeignet sein. Die Brennkraftmaschine kann dabei bevorzugt als stationärer Otto-Gasmotor ausgebildet sein. Das Energieversorgungsnetz kann beispielsweise ein öffentliches Energieversorgungsnetz sein.

Die Erfindung kann auch bei nicht-stationären Brennkraftmaschinen zum Einsatz kommen (Beispiel: Schiffsmotor).
Die Erfindung kann aber auch in Verbindung mit anderen Verbrauchern, wie beispielsweise einem Gasverdichter, eingesetzt werden.

Weitere Vorteile und Einzelheiten der Erfindung ergeben sich anhand der Figuren sowie der dazugehörigen Figurenbeschreibung. Dabei zeigen
- Fig. 1: eine Ausführungsform einer erfindungsgemäßen Brennkraftmaschine mit zwei Turboladern,
- Fig. 2: eine Ausführungsform einer erfindungsgemäßen Brennkraftmaschine mit einem Turbolader sowie
- Fig. 3: eine weitere Ausführungsform einer erfindungsgemäßen Brennkraftmaschine mit zwei Turboladern,
- Fig. 4: eine schematische Darstellung zum Vergleich des Standes der Technik mit der Erfindung.

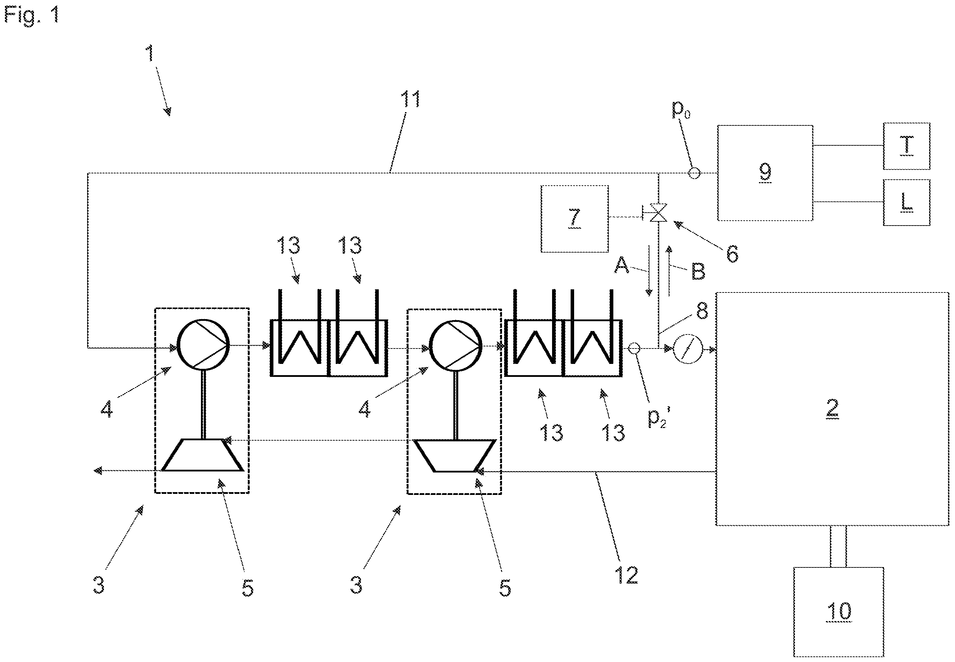

Fig. 1 zeigt eine Brennkraftmaschine 1, welche über einen Motorblock 2 verfügt. In diesem sind Zylinder (nicht dargestellt) angeordnet, in welchen die Verbrennung eines Treibstoff-Luft-Gemisches geschieht. Zur Erzeugung des Treibstoff-Luft-Gemisches ist eine Mischeinrichtung 9 vorgesehen. Diese ist mit einem Reservoir für Treibstoff T sowie einer Ansaugvorrichtung für Luft L verbunden. Über eine Zufuhrleitung 11 wird das in der Mischeinrichtung 9 hergestellte Treibstoff-Luft-Gemisch dem Motorblock 2 zugeführt. Die durch die Verbrennung im Zylinderblock 2 erzeugten Gase werden über eine Abgasleitung 12 abgeführt.

Es sind zwei Turbolader 3 vorgesehen, wobei jeweils ein Verdichter 4 der Turbolader 3 in der Zufuhrleitung 11 angeordnet ist. Die Turbinen 5 der Turbolader 3 sind in der Abgasleitung 12 angeordnet. Die Verdichter 4 sind in der Zufuhrleitung 11 in Serie geschaltet. Analog sind auch die Turbinen 5 in Serie geschaltet. Den Verdichtern 4 folgen jeweils zwei Gemischkühler 13. Die Turbinen 5 treiben die Verdichter 4 an, welche einen erhöhten Druck - den Ladedruck - des Treibstoff-Luft-Gemischs erzeugen. Durch diesen erhöhten Druck gelangt mehr Treibstoff-Luft-Gemisch als bei einer Saugmotorausführung in die Zylinder, was die Leistung erhöht.

Es ist ebenfalls eine Umblaseleitung 8 vorgesehen, in welcher das Umblaseventil 6 angeordnet ist. Während des Betriebs der Brennkraftmaschine 1 kann durch Öffnen des Umblaseventils 6 ein Teilstrom des Treibstoff-Luft-Gemisches nicht dem Motorblock 2 zugeführt werden. Durch den Ladedruck wird stattdessen ein Teilstrom wieder zurück in die Zufuhrleitung 11 geleitet (über die Umblaseleitung 8 in Strömungsrichtung B). Dies senkt die Leistung der Brennkraftmaschine 1. Durch diese Maßnahme ist also die Leistung der Brennkraftmaschine 1 regelbar oder steuerbar. Diese Regelung oder Steuerung geschieht in einer Steuer- oder Regeleinrichtung 7, welche mit dem Umblaseventil 6 verbunden ist.

Es kann ebenfalls ein gemeinsames oder jeweils ein Wastegate (nicht dargestellt) für die Turbolader 3 vorhanden sein.

Vor dem Starten der Brennkraftmaschine 1 ist sowohl die Zufuhrleitung 11 als auch die Umblaseleitung 8 nicht mit Treibstoff-Luft-Gemisch gefüllt. Dies hat sicherheitstechnische Gründe. Beispielsweise könnte sich das Treibstoff-Luft-Gemisch durch Hitzeeinwirkung in der Zufuhrleitung 11 entzünden.

Wird die Brennkraftmaschine 1 nun durch einen externen Antrieb (nicht dargestellt) geschleppt, wird Treibstoff-Luft-Gemisch angesaugt. Im Stand der Technik musste das Treibstoff-Luft-Gemisch durch die Zufuhrleitung 11, die Verdichter 4 und die Gemischkühler 13 gesaugt werden. Durch das Öffnen des Umblaseventils 6 hat das Treibstoff-Luft-Gemisch einen wesentlich kürzeren und widerstandsfreieren Weg über die Umblaseleitung 8 (in Strömungsrichtung A) zurückzulegen, wodurch sich die Startzeit verkürzt.

Mit Hilfe der Brennkraftmaschine 1 - in diesem Fall ein stationärer Gasmotor - wird ein Generator 10 angetrieben. Der Generator 10 kann beispielsweise an ein Energieversorgungsnetz angeschlossen werden und diesem Energie zuführen. Die Brennkraftmaschine 1 kann natürlich auch andere Verbraucher bedienen, etwa mechanische Antriebe oder Kompressoren.

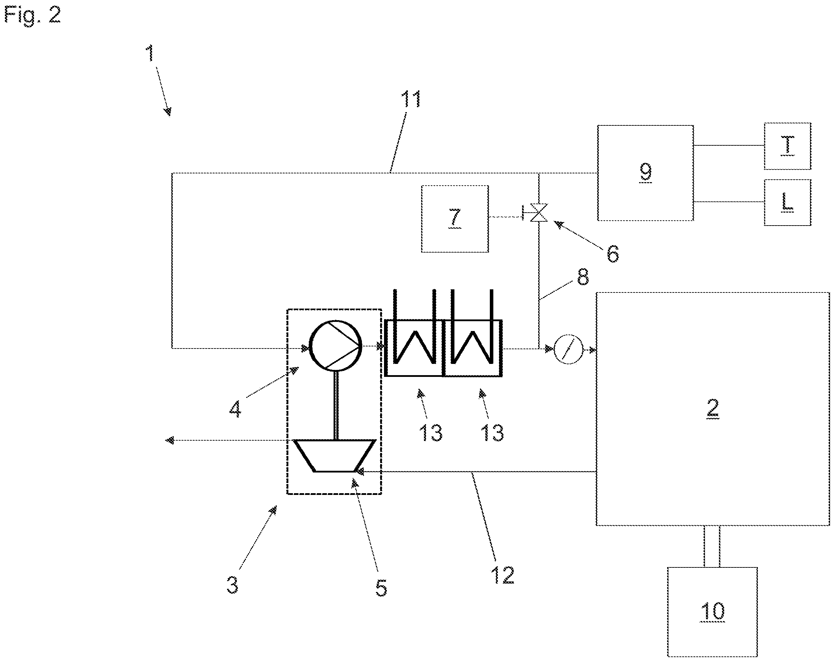

Fig. 2 zeigt eine Ausführungsform der Erfindung mit einem einzigen Turbolader 3. Ansonsten ist diese Ausführungsform zu der aus Figur 1 analog.

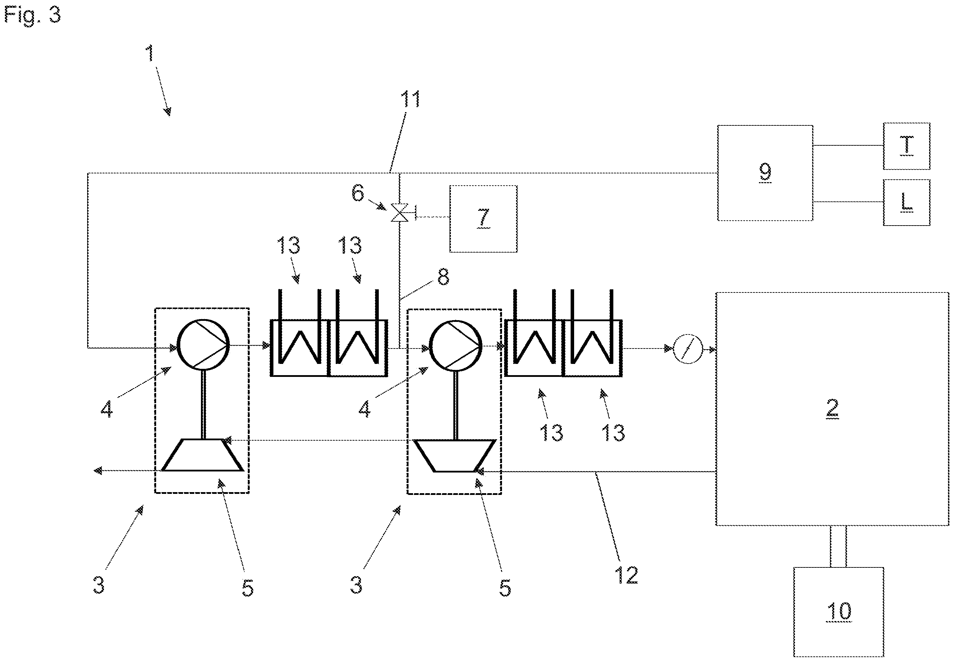

Fig. 3 zeigt ein Ausführungsbeispiel der Erfindung mit einem zweistufiger Aufladung wie in Figur 1, jedoch sind hier die Umblaseleitung 8 und das Umblaseventil 6 zwischen den Verdichterstufen (zwischen den zwei Verdichtern 4) angeordnet. Die Umblaseleitung 8 umgeht hier also nicht beide Verdichter 4, sondern nur einen Verdichter 4, in diesem Fall den Niederdruckverdichter.
So wird bei Öffnung des Umblaseventils 6 dem Treibstoffgemisch für den Startvorgang ein zwar verkürzter und mit weniger Strömungswiderstand behafteter Pfad angeboten, allerdings muss das Treibstoffgemisch beim Startvorgang einen Verdichtern 4 passieren.
Es kann dennoch vorteilhaft sein, das Umblaseventil 6 so wie in Figur 3 gezeigt anzuordnen, beispielsweise weil das Umblaseventil 6 auch für Regelzwecke im Normalbetrieb der Brennkraftmaschine 1 verwendet werden soll.

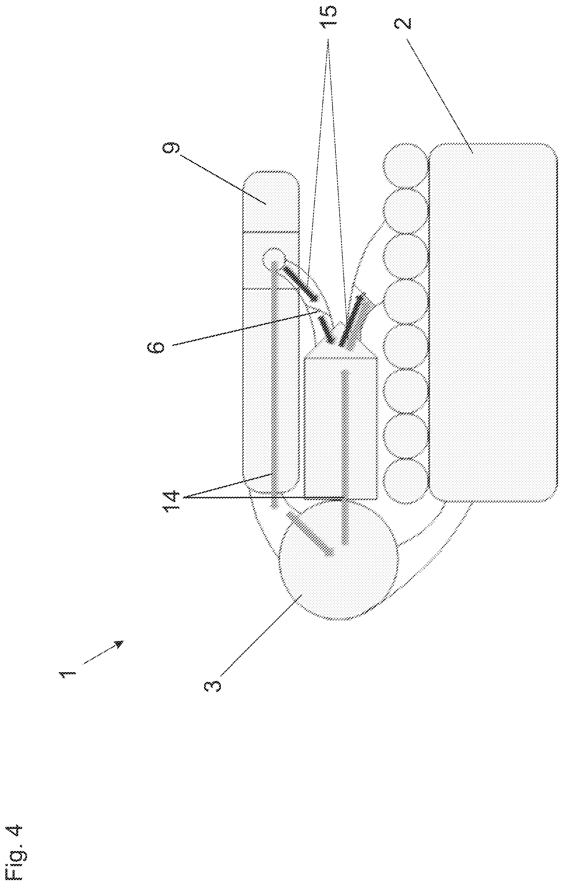

Fig. 4 ist eine Seitenansicht einer Brennkraftmaschine 1, wodurch die durch die vorliegende Erfindung bewirkte Verkürzung des Strömungspfades besonders deutlich zum Ausdruck kommt.

Zu erkennen sind der Motorblock 2, der Turbolader 3, die Mischeinrichtung 9 sowie das Umblaseventil 6.
Beim Starten gemäß dem Stand der Technik musste das Treibstoffgemisch den langen Pfad mit den Bezugszeichen 14 nehmen. Der mit dem Bezugszeichen 15 versehene Pfad ist jener, welchen das Treibstoff- Luft-Gemisch gemäß der Erfindung nehmen muss. Durch die Erfindung muss das Treibstoff-Luft-Gemisch also nur einen Bruchteil des Totvolumens auffüllen beziehungsweise nur einen Bruchteil der Weglänge zurücklegen, wobei außerdem Strömungswiderstände überwunden werden müssen.

### Liste der verwendeten Bezugszeichen:

- 1: Brennkraftmaschine
- 2: Motorblock
- 3: Turbolader
- 4: Verdichter
- 5: Turbine
- 6: Umblaseventil
- 7: Regeleinrichtung
- 8: Umblaseleitung
- 9: Mischeinrichtung
- 10: Generator
- 11: Zufuhrleitung
- 12: Abgasleitung
- 13: Gemischkühler
- 14, 15: Pfad

## Patentansprüche

1. Brennkraftmaschine (1) mit
- zumindest einem Turbolader (3), welcher einen Verdichter (4) aufweist,
- zumindest einem Gemischkühler (13),
- einem Umblaseventil (6), mittels welchem der Verdichter (4) und der zumindest eine Gemischkühler (13) zumindest von einem Teilstrom eines für die Verbrennung vorgesehenen Treibstoff-Luft-Gemisches umgehbar ist, sowie
- einer mit dem Umblaseventil (6) verbundenen Steuer- oder Regeleinheit (7) zur Regelung oder Steuerung eines Öffnungsgrades des Umblaseventils (6),
wobei die Steuer- oder Regeleinheit (7) dazu ausgebildet ist, das Umblaseventil (6) beim Starten der Brennkraftmaschine (1) zumindest teilweise zu öffnen und/oder zumindest teilweise geöffnet zu halten,
**dadurch gekennzeichnet, dass** die Steuer- oder Regeleinheit (7) weiterhin dazu ausgebildet ist, dass der Verdichter (4) des Turboladers (3) und der zumindest eine Gemischkühler (13) durch das Umblaseventil (6) in beide Richtungen umgangen werden kann, derart, dass sobald die Wirkung des Turboladers (3) einsetzt, und nach dem Verdichter (4) und dem Gemischkühler (13) ein höherer Druck als vor dem Verdichter (4) vorliegt, durch Öffnen des Umblaseventils (6) ein Teilstrom des Treibstoff-Luft-Gemischs zurück in die Zufuhrleitung (11) des Verdichters (4) geleitet wird, um die Brennkraftmaschine (1) zu steuern.

2. Brennkraftmaschine nach Anspruch 1, **dadurch gekennzeichnet, dass** genau ein Turbolader (3) vorgesehen ist.

3. Brennkraftmaschine nach Anspruch 1, **dadurch gekennzeichnet, dass** zumindest zwei Turbolader (3) vorgesehen sind, wobei die Verdichter (4) der zumindest zwei Turbolader (3) vorzugsweise in Serie geschaltet sind.

4. Brennkraftmaschine nach Anspruch 3, **dadurch gekennzeichnet, dass** die Verdichter (4) sämtlicher Turbolader (3) der Brennkraftmaschine (1) zumindest von einem Teilstrom des für die Verbrennung vorgesehenen Treibstoff-Luft-Gemisches mittels des Umblaseventils (6) umgehbar sind.

5. Brennkraftmaschine nach einem der Ansprüche 1 bis 4, **dadurch gekennzeichnet, dass** eine Umblaseleitung (8) zur Umgehung des Verdichters (4) des zumindest einen Turboladers (3) vorgesehen ist, wobei das Umblaseventil (6) in der Umblaseleitung (8) angeordnet ist.

6. Brennkraftmaschine nach wenigstens einem der vorangegangenen Ansprüche, **dadurch gekennzeichnet, dass** eine Umblaseleitung (8) zur Umgehung des zumindest einen Gemischkühlers (13) vorgesehen ist, wobei das Umblasventil in der Umblaseleitung (8) angeordnet ist.

7. Brennkraftmaschine nach Anspruch 6, **dadurch gekennzeichnet, dass** die Umblaseleitung (8) zur Umgehung des zumindest einen Gemischkühlers (13) mit der Umblaseleitung (8) zur Umgehung des Verdichters (4) des zumindest einen Turboladers (3) kombiniert ist.

8. Brennkraftmaschine nach einem der Ansprüche 1 bis 7, **dadurch gekennzeichnet, dass** eine Mischeinrichtung (9) vorgesehen ist, mittels welcher das Treibstoff-Luft-Gemisch herstellbar ist.

9. Brennkraftmaschine nach Anspruch 8, **dadurch gekennzeichnet, dass** die Umblaseleitung (8) mit einem Ausgang der Mischeinrichtung (9) für das Treibstoff-Luft-Gemisch verbunden ist.

10. Brennkraftmaschine nach einem der Ansprüche 1 bis 9, **dadurch gekennzeichnet, dass** die Brennkraftmaschine (1) ein - vorzugsweise stationärer - Gasmotor ist.

11. Verfahren zum Starten einer Brennkraftmaschine, wobei beim Starten der Brennkraftmaschine (1) zumindest ein Teilstrom eines für die Verbrennung vorgesehenen Treibstoff-Luft-Gemisches um einen Verdichter (4) zumindest eines Turboladers (3) und zumindest einem Gemischkühler (13) herumgeführt wird,
**dadurch gekennzeichnet, dass** sobald die Wirkung des Turboladers (3) einsetzt, und nach dem Verdichter (4) und dem Gemischkühler ein höherer Druck als vor dem Verdichter (4) vorliegt, zur Steuerung der Brennkraftmaschine ein Teilstrom des Treibstoff-Luft-Gemischs zurück in die Zufuhrleitung (11) des Verdichters (4) geleitet wird.

12. Verfahren nach Anspruch 11, **dadurch gekennzeichnet, dass** zur Umgehung des Verdichters (4) ein Umblaseventil (6) zumindest teilweise geöffnet wird und/oder zumindest teilweise geöffnet gehalten wird.

13. Verfahren nach Anspruch 12, **dadurch gekennzeichnet, dass** das Umblaseventil (6) beim Start der Brennkraftmaschine (1) vollständig geöffnet und/oder vollständig geöffnet gehalten wird.

14. Verfahren nach einem der Ansprüche 11 bis 13, **dadurch gekennzeichnet, dass** nach erfolgtem Start ein Generator (10) - vorzugsweise geeignet zur Einspeisung elektrischer Energie in ein Energieversorgungsnetz - durch die Brennkraftmaschine (1) angetrieben wird.

15. Verfahren nach einem der Ansprüche 11 bis 13, **dadurch gekennzeichnet, dass** nach erfolgtem Start ein Gasverdichter mittels der Brennkraftmaschine (1) angetrieben wird.

## Claims

1. An internal combustion engine (1) comprising
- at least one turbocharger (3) which has a compressor (4),
- at least one mixture cooler (13),
- a bypass valve (6), by means of which the compressor (4) and the at least one mixture cooler (13) can be bypassed at least by a partial flow of a fuel-air mixture provided for combustion, and
- an open-loop or closed-loop control unit (7) connected to the bypass valve (6) for the open-loop or closed-loop control of a degree of opening of the bypass valve (6),
wherein the open-loop or closed-loop control unit (7) is adapted to at least partly open and/or keep at least partially opened the bypass valve (6) when the internal combustion engine (1) is started,
**characterised in that** the open-loop or closed-loop control unit (7) is further so adapted that the compressor (4) of the turbocharger (3) and the at least one mixture cooler (13) can be bypassed by the bypass valve (6) in both directions in such a way that as soon as the action of the turbocharger (3) starts and a higher pressure is present downstream of the compressor (4) and the mixture cooler (13) than upstream of the compressor (4) a partial flow of the fuel-air mixture is passed back into the feed line of the compressor (4) by opening of the bypass valve (6) to control the internal combustion engine (1).

2. An internal combustion engine according to claim 1 **characterised in that** there is provided exactly one turbocharger (3).

3. An internal combustion engine according to claim 1 **characterised in that** there are provided at least two turbochargers (3), wherein the compressors (4) of the at least two turbochargers (3) are preferably connected in series.

4. An internal combustion engine according to claim 3 **characterised in that** the compressors (4) of all turbochargers (3) of the internal combustion engine (1) can be bypassed at least by a partial flow of the fuel-air mixture provided for combustion by means of the bypass valve (6).

5. An internal combustion engine according to one of claims 1 to 4 **characterised in that** there is provided a bypass line (8) for bypassing the compressor (4) of the at least one turbocharger (3), wherein the bypass valve (6) is arranged in the bypass line (8).

6. An internal combustion engine according at least one of the preceding claims **characterised in that** there is provided a bypass line (8) for bypassing the at least one mixture cooler (13), wherein the bypass valve (6) is arranged in the bypass line (8).

7. An internal combustion engine according to claim 6 **characterised in that** the bypass line (8) for bypassing the at least one mixture cooler (13) is combined with the bypass line (8) for bypassing the compressor (4) of the at least one turbocharger (3).

8. An internal combustion engine according to one of claims 1 to 7 **characterised in that** there is provided a mixing device (9), by means of which the fuel-air mixture can be produced.

9. An internal combustion engine according to claim 8 **characterised in that** the bypass line (8) is connected to an outlet of the mixing device (9) for the fuel-air mixture.

10. An internal combustion engine according to one of claims 1 to 9 **characterised in that** the internal combustion engine (1) is a - preferably stationary - gas engine.

11. A method of starting an internal combustion engine (1), wherein upon starting of the internal combustion engine (1), at least a partial flow of a fuel-air mixture provided for combustion is passed around a compressor (4) of at least one turbocharger (3) and at least one mixture cooler (13),
**characterised in that** as soon as the action of the turbocharger (3) starts and a higher pressure is present downstream of the compressor (4) and the mixture cooler (13) than upstream of the compressor (4) a partial flow of the fuel-air mixture is passed back into the feed line (11) of the compressor (4) to control the internal combustion engine.

12. A method according to claim 11 **characterised in that** a bypass valve (6) is at least partly opened and/or kept at least partially opened to bypass the compressor (4).

13. A method according to claim 12 **characterised in that** the bypass valve (6) is completely opened and/or kept completely opened upon starting of the internal combustion engine (1).

14. A method according to one of claims 11 to 13 **characterised in that** a generator - preferably suitable for feeding electrical energy into a power supply network - is driven by the internal combustion engine (1) after starting is effected.

15. A method according to one of claims 11 to 13 **characterised in that** a gas compressor is driven by means of the internal combustion engine (1) after startup is effected.

## Revendications

1. Moteur à combustion interne (1) avec
- au moins un turbocompresseur (3), lequel présente un compresseur (4),
- au moins un refroidisseur de mélange (13),
- une soupape de dérivation (6), au moyen de laquelle le compresseur (4) et l'au moins un refroidisseur de mélange (13) peuvent être contournés au moins par un flux partiel d'un mélange carburant-air prévu pour la combustion, ainsi que
- une unité de commande ou de régulation (7) reliée à la soupape de dérivation (6) pour la régulation ou la commande d'un degré d'ouverture de la soupape de dérivation (6),
dans lequel l'unité de commande ou de régulation (7) est réalisée pour ouvrir au moins en partie et/ou pour maintenir ouverte au moins en partie la soupape de dérivation (6) lors du démarrage du moteur à combustion interne (1),
**caractérisé en ce que** l'unité de commande ou de régulation (7) est réalisée en outre pour que le compresseur (4) du turbocompresseur (3) et l'au moins un refroidisseur de mélange (13) puissent être contournés par la soupape de dérivation (6) dans les deux directions de sorte que, dès que l'effet du turbocompresseur (3) se fait sentir et qu'après le compresseur (4) et le refroidisseur de mélange, il y a une pression supérieure à celle avant le compresseur (4), un flux partiel du mélange carburant-air est reconduit dans la conduite d'alimentation (11) du compresseur (4) par ouverture de la soupape de dérivation (6) pour commander le moteur à combustion interne (1).

2. Moteur à combustion interne selon la revendication 1, **caractérisé en ce qu'**exactement un turbocompresseur (3) est prévu.

3. Moteur à combustion interne selon la revendication 1, **caractérisé en ce qu'**au moins deux turbocompresseurs (3) sont prévus, dans lequel les compresseurs (4) des au moins deux turbocompresseurs (3) sont montés de préférence en série.

4. Moteur à combustion interne selon la revendication 3, **caractérisé en ce que** les compresseurs (4) de tous les turbocompresseurs (3) du moteur à combustion interne (1) peuvent être contournés au moins par un flux partiel du mélange carburant-air prévu pour la combustion au moyen de la soupape de dérivation (6).

5. Moteur à combustion interne selon l'une quelconque des revendications 1 à 4, **caractérisé en ce qu'**une conduite de dérivation (8) est prévue pour le contournement du compresseur (4) de l'au moins un turbocompresseur (3), dans lequel la soupape de dérivation (6) est agencée dans la conduite de dérivation (8).

6. Moteur à combustion interne selon au moins une des revendications précédentes, **caractérisé en ce qu'**une conduite de dérivation (8) est prévue pour le contournement de l'au moins un refroidisseur de mélange (13), dans lequel la soupape de dérivation est agencée dans la conduite de dérivation (8).

7. Moteur à combustion interne selon la revendication 6, **caractérisé en ce que** la conduite de dérivation (8) pour le contournement de l'au moins un refroidisseur de mélange (13) est combinée à la conduite de dérivation (8) pour le contournement du compresseur (4) de l'au moins un turbocompresseur (3).

8. Moteur à combustion interne selon l'une quelconque des revendications 1 à 7, **caractérisé en ce qu'**un dispositif de mélange (9) est prévu, au moyen duquel le mélange carburant-air peut être fabriqué.

9. Moteur à combustion interne selon la revendication 8, **caractérisé en ce que** la conduite de dérivation (8) est reliée à une sortie du dispositif de mélange (9) pour le mélange carburant-air.

10. Moteur à combustion interne selon l'une quelconque des revendications 1 à 9, **caractérisé en ce que** le moteur à combustion interne (1) est un moteur à gaz - de préférence stationnaire.

11. Procédé de démarrage d'un moteur à combustion interne, dans lequel lors du démarrage du moteur à combustion interne (1), au moins un flux partiel d'un mélange carburant-air prévu pour la combustion est guidé autour d'un compresseur (4) d'au moins un turbocompresseur (3) et d'au moins un refroidisseur de mélange (13),
**caractérisé en ce que**, dès que l'effet du turbocompresseur (3) se fait sentir et qu'après le compresseur (4) et le refroidisseur de mélange, il y a une pression supérieure à celle avant le compresseur (4), un flux partiel du mélange carburant-air est reconduit dans la conduite d'alimentation (11) du compresseur (4) pour la commande du moteur à combustion interne.

12. Procédé selon la revendication 11, **caractérisé en ce qu'**une soupape de dérivation (6) est ouverte au moins en partie et/ou est maintenue ouverte au moins en partie pour le contournement du compresseur (4).

13. Procédé selon la revendication 12, **caractérisé en ce que** la soupape de dérivation (6) est ouverte entièrement et/ou maintenue entièrement ouverte lors du démarrage du moteur à combustion interne (1).

14. Procédé selon l'une quelconque des revendications 11 à 13, **caractérisé en ce qu'**après que le démarrage a eu lieu, un générateur (10) - de préférence adapté pour l'injection d'énergie électrique dans un réseau d'alimentation en énergie - est entraîné par le moteur à combustion interne (1).

15. Procédé selon l'une quelconque des revendications 11 à 13, **caractérisé en ce qu'**après que le démarrage a eu lieu, un compresseur de gaz est entraîné au moyen du moteur à combustion interne (1).
